# EUROPEAN PATENT SPECIFICATION

(11) **EP 0 700 356 B1**
(45) Date of publication and mention of the grant of the patent: **03.09.1997**
(21) Application number: 94902727.0
(22) Date of filing: 09.12.1993
(51) Int. Cl.: B65D 83/20, B29C 45/00, B29C 45/26

(54) **ACTUATOR FOR AN AEROSOL CONTAINER**
BETÄTIGUNGSAUFSATZ FÜR EINEN SPRÜHBEHÄLTER
DISPOSITIF D'ACTIONNEMENT POUR UN RECIPIENT AEROSOL

(30) Priority: 24.05.1993 WO PCT/EP93/01293
(43) Date of publication of application: 13.03.1996
(73) Proprietor: Deutsche Präzisions-Ventil GmbH, 65795 Hattersheim am Main (DE)
(72) Inventor: ZIMMERHACKEL, Franz, D-65795 Hattersheim (DE)
(74) Representative: Schmidt-Evers, Jürgen, Dipl.-Ing.
(86) International application number: EP9303464
(87) International publication number: WO9427890

(56) References cited:
- EP-A- 0 452 208
- EP-A- 0 550 409
- FR-A- 2 588 490
- GB-A- 1 326 714
- US-A- 3 767 125

## Description

### BACKGROUND OF THE INVENTION

This invention generally relates to actuators or spouts for pressurized packages commonly referred to as aerosol containers, and more specifically, to such actuators that are particularly well suited to dispense foam from aerosol containers.

Aerosol packages typically comprise a pressurized container that holds a fluid or solution, and a valve unit to dispense the fluid or solution from the container. The valve unit is situated in the neck of container and is opened by finger pressure against an actuator that is disposed at one terminal end of a valve stem. The valve unit has a moveable valve body and an associated hollow valve stem that, upon the application of the above-mentioned finger pressure, unseats from a gasket to permit flow of product into the valve stem and then through and from the actuator.

From GB-A-1326714 an actuator for an aerosol container is known, comprising a body forming an inlet to connect the actuator to a discharge outlet of the container, in fluid communication therewith, to receive fluid therefrom, a side surface defining a single discharge opening to discharge fluid from the actuator, and a single body passageway extending between the inlet and the discharge opening to conduct the fluid from the inlet to the discharge opening. The body passageway is surrounded by a thin wall of material and has a narrow outer portion, a narrow inner portion and a wider mid portion.

Many aerosol containers are used to dispense a foam that is used for personal or household purposes, such as mousse. It is known that the texture or quality of foams emerging from pressurized foam containers can be improved by making the foam pass through narrow passageways in the actuators of the containers. Heretofore, typically, in order to provide an actuator with a multitude of such narrow passageways, it has been necessary to make the actuator from two or more pieces that are made separately and then joined or fitted together as described in US-A-3,767,125. Despite the associated economic advantages, no commercially practical process has been developed for forming a one-piece, integrally molded actuator having a multitude of narrow passageways.

Another disadvantage of prior art foam actuators is that often, after the actuator is used to dispense a quantity of foam, a small amount of that foam remains on the surface of the actuator. Over a period of time, that foam collapses and dries, leaving a sticky residue on the actuator that is both messy and unsightly.

### SUMMARY OF THE INVENTION

An object of this invention is to improve actuators for aerosol containers.

Another object of the present invention is to provide an actuator that is able to draw foam back inward, into the actuator, after the actuator has been used to dispense a quantity of foam from an aerosol container.

A further object of this invention is to provide a one-piece, integrally molded actuator for dispensing foam from an aerosol container and having a multitude of narrow passageways that act to improve the texture and quality of the foam dispensed from the container.

Another object of this invention is to form a foam actuator in a plastic injection molding process, and to utilize the natural shrinkage that occurs during the molding process to form pouch-shaped passageways in the actuator that both improve the texture and quality of the foam discharged from the actuator, and also help to draw back into the actuator foam residue from the actuator surface.

These and other objectives are attained with an actuator for an aerosol container, comprising a body forming an inlet, a top surface defining a multitude of discharge slits, and a multitude of body passageways each being formed in an upper massive part of the body to conduct fluid from the inlet to the discharge slits. Each of the body passageways has a pouch shape, including narrower upper and lower portions and a wider mid portion. Preferably, the discharge slits and the body passageways radially extend outward from, and are equally spaced apart around, a central portion of the body. With one embodiment, that central portion comprises a solid stem; and in another embodiment, that central portion forms a conduit that extends between the inlet and the top surface of the body to help discharge foam from the actuator.

When the actuator is used to dispense foam from an aerosol container, the shape of the body passageways has several advantages. First, that shape helps the foam to expand as it passes outward through the actuator; and second, after the container has been used to dispense a quantity of foam, the shape of the body passageways helps to draw back into the actuator any excess foam remaining on the outside of the actuator. Preferably, the actuator is formed in a plastic injection molding process, and the body passageways of the actuator are formed into the desired shape as the plastic cools during the molding process.

Further benefits and advantages of the invention will become apparent from a consideration of the following detailed description given with reference to the accompanying drawings, which specify and show preferred embodiments of the invention.

### BRIEF DESCRIPTION OF THE DRAWINGS

Figure 1 is a perspective view of an actuator, with portions broken away, embodying the present invention.

Figure 2 is a cross-sectional view of the actuator, taken along plane II-II of Figure 1.

Figure 3 is a front view of the actuator.

Figure 4 is a back view of the actuator.

Figure 5 is a top view of the actuator.

Figure 6 is a perspective view of an alternate embodiment of the actuator, also with portions broken away.

Figure 7 is a cross-sectional view of the actuator of Figure 6, taken along plane VII-VII thereof.

Figure 8 is a simplified view illustrating a mold for making the actuator shown in Figures 1-5.

Figure 9 illustrates a portion of a mold for making the actuator of Figures 6 and 7.

Figure 10 shows a portion of the actuator formed in the mold of Figure 8.

Figure 11 shows the actuator portion of Figure 10 after the actuator has cooled.

Figure 12 shows the actuator of Figures 1-5 assembled in a valve for an aerosol container.

### DETAILED DESCRIPTION OF THE PREFERRED EMBODIMENTS

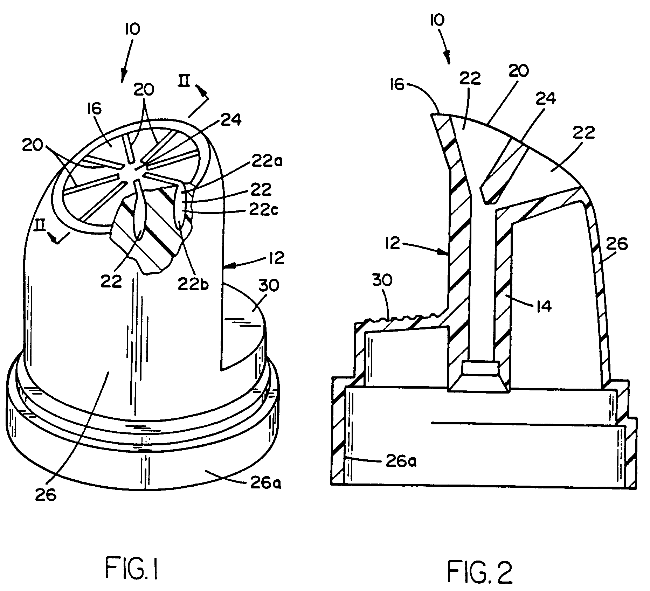

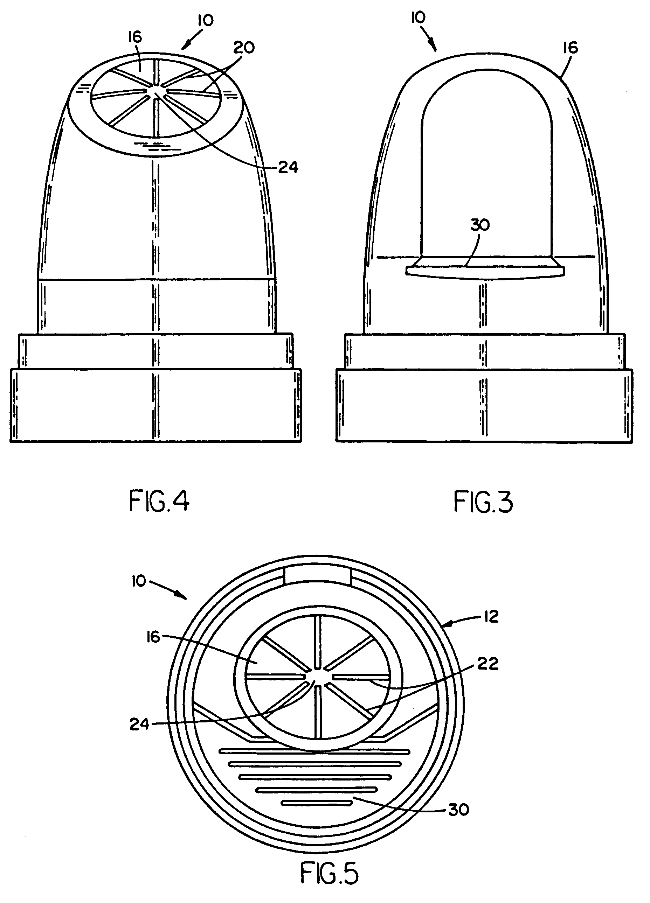

Figures 1-5 illustrate an actuator or spray spout, generally designated at 10, for an aerosol container. Actuator 10 comprises body 12 that forms inlet 14, top surface 16 that defines a multitude of elongated discharge slits 20, and a multitude of body passageways 22. Preferably, actuator body 12 also forms central stem 24, outside shell 26 including a lower mounting section 26a, and a finger or actuator surface 30. As discussed below, preferably actuator body 12 is a one-piece body formed in an injection molding process.

Inlet 14 is provided to connect actuator 10 to the valve stem of an aerosol valve, in fluid communication therewith. Each of the body passageways 22 extends between inlet 14 and a respective one of the discharge slits 20 to conduct foam from the body inlet to that discharge slit, through which the fluid is then discharged from the actuator. Shell 26, particularly mounting section 26a, is provided to mount actuator 10 on an aerosol container. Surface 30 provides an area for a user to apply finger pressure to actuator 10 to open the valve stem to which the actuator is connected and thereby dispense fluid through the actuator.

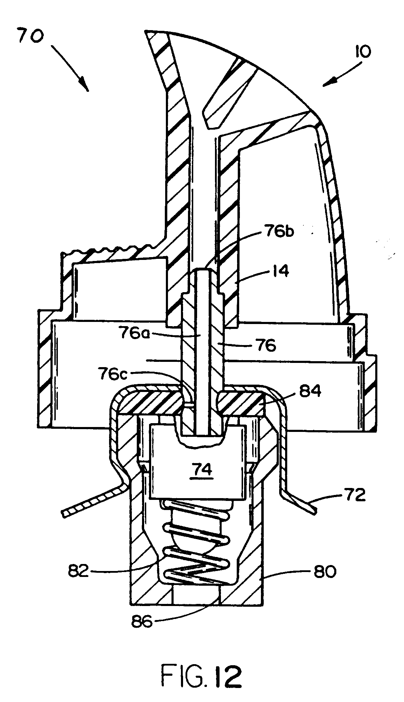

With particular reference to Figures 1 and 11, each passageway 22 of actuator body 12 has a pouch shape, including narrower upper and lower portions 22a and 22b and a wider intermediate or middle portion 22c. More specifically, the upper and lower portions 22a and 22b of each passageway 22 have a width generally equal to the width of the discharge slits 20. The sidewalls 32a and 32b of each passageway 22 extend downwardly and outwardly from the top of the passageway, forming the enlarged central portion 22c of the passageway; and from this central portion, the sidewalls of each passageway extend downwardly and inwardly, narrowing the width of the passageway.

The unique shape of passageways 22 of actuator 10 has several advantages. First, when the actuator is used to dispense foam from an aerosol container, the enlarged portions of the body passageways help that foam to expand, improving the texture and quality of the foam. Second, after the actuator has been used to dispense a quantity of foam, the foam remaining in passageways 22 partially collapses, producing an appreciable vacuum that draws foam back into the passageways from top surface 16 of the actuator. This helps to keep that top surface clean and free of excess foam, eliminating the sticky residue that can be produced by any foam remaining on that surface.

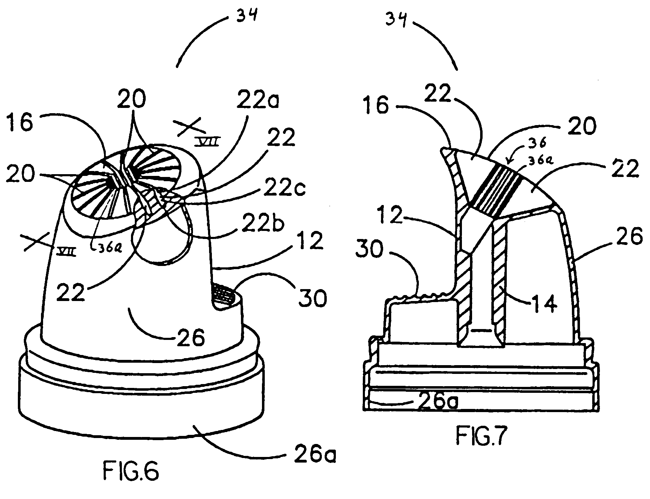

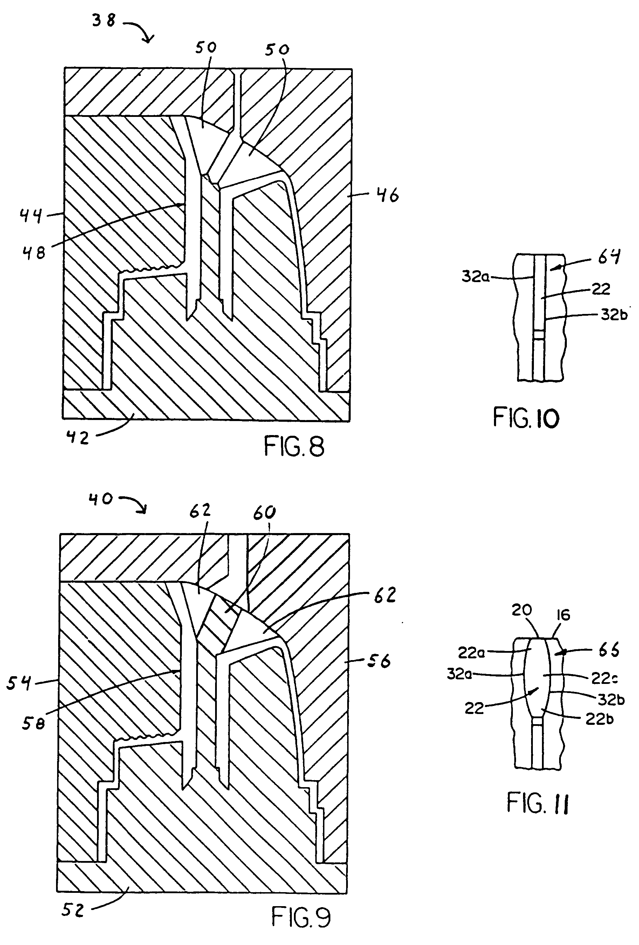

Figures 6 and 7 show an alternate actuator 34 having a central conduit 36 in place of stem 24. More particularly, actuator 34 is very similar to actuator 10, and like reference numbers are used to identify identical or corresponding elements of the two actuators. Thus, actuator 34 includes body 12 that forms inlet 14, and top surface 16 that defines a multitude of body passageways 22. Preferably, actuator body 12 of actuator 34 also forms outside shell 26 including lower mounting section 26a, and finger or actuator surface 30. Inlet 14, body surface 16, discharge slits 20, body passageways 22, shell 26, and actuator surface 30 of actuator 34 serve the same functions as the corresponding elements of actuator 10. Also, preferably, body passageways 22 of actuator 34 have pouch shapes, including narrower upper and lower portions 22a and 22b and a wider intermediate or middle portion 22c. In addition, body 12 of actuator 34, like body 12 of actuator 10, is preferably a one-piece body formed in an injection molding process.

Actuators 10 and 34 differ, as mentioned above, in that the latter actuator has a central conduit 36, including a top outlet opening 36a, where the former actuator has stem 24. More specifically, in actuator 34, conduit 36 extends between and is in fluid communication with inlet 14 and top outlet 36a, and preferably discharge slits 20 and body passageways 22 extend radially outward from and are in fluid communication with conduit 36.

When actuator 34 is used to discharge product from an aerosol container, the product evenly spreads through all the cavities 22 of the radical slots 20, as well as into the central conduit 36. In this way, conduit 36 facilitates the discharge of foam from actuator 34. That central conduit 36 also helps to draw residue foam back into the actuator. In addition, when used with an aerosol container having a high percentage of propellant or a propellant of high pressure, the central conduit 36 of actuator 34 dramatically reduces the noise level caused by the discharge or spray of product from the aerosol container.

Preferably, as previously mentioned, actuators 10 and 34 are formed in injection molding processes and Figures 8 and 9 are simplified illustrations of molds 38 and 40 for forming actuators 10 and 34. With reference to Figure 8, mold 38 includes first, second, and third parts 42, 44, and 46 that, when brought together as shown in Figure 8, form a recess or cavity 48 substantially having the shape of actuator 10. A multitude of blades 50 or similar means are connected to mold part 46 to form discharge slits 20 and body passageways 22, and these blades may be retractable into mold part 46.

Mold 40 is very similar to mold 38 and includes a plurality of parts 52, 54, and 56 that, when brought together as shown in Figure 9, form a recess or cavity 58 substantially having the shape of actuator 34. A principal difference between molds 38 and 40 is that the latter mold includes a stem 60 that is used to form central conduit 36 of actuator 34. Mold 40, like mold 38, may include a multitude of retractable blades 62 or similar means connected to mold part 56 to form the discharge slits 20 and the body passageways 22 of actuator 34.

To form actuator 10, mold parts 42, 44, and 46 are brought together to form cavity 48, and then a hot molten plastic is injected into the mold cavity to fill that cavity. Similarly, to form actuator 34, mold parts 52, 54, and 56 are brought together to form cavity 58, and a hot molten plastic is injected into that mold cavity to fill the cavity. In both cases, after the cavity is filled with the plastic, the mold is cooled to harden the plastic. As the plastic cools, the upper portions of the actuator body 12 shrink from an initial shape, shown at 64 in Figure 10, to a final shape, shown at 66 in Figure 11, thus forming enlarged portions 22c of passageways 22. Once the plastic has sufficiently hardened, the mold is opened and the actuator is removed.

The above-mentioned shrinkage of the plastic material is normally undesirable, and usually efforts are made to prevent or minimize this shrinkage. The present invention employs this normally undesirable effect to actually improve the design and operation of the actuator.

Figure 12 shows actuator 10 assembled in an aerosol valve 70, which also includes mounting cup 72, valve body 74, valve stem 76, valve housing 80, spring 82, and gasket 84. The mounting cup 72 is shown partially cut away, and valve housing 80 is crimped to the mounting cup. Gasket 84 is disposed between the top of valve housing 80 and mounting cup and 72 extends around a central, top opening in the mounting cup. Valve stem 76 extends through this top opening and through gasket 84, and the valve stem forms a fluid passageway 76a that extends upward to the valve outlet 76b. The lower sidewall of valve stem 76 forms a through opening 76c that, as shown in Figure 12, is closed by gasket 84. Valve body 74 is connected to the lower end of valve stem 76, and the valve body is biased upwardly, into engagement with gasket 84, by spring 82, which is disposed between the bottom of the valve body and a surface of valve housing 80. Valve body 74 forms one or more openings that form fluid passageways between the exterior and interior of the valve body.

Aerosol valve 70 is of the type that is designed to be used in an inverted position. In particular, the valve is intended to be mounted on the top of an aerosol container that is inverted to dispense fluid downwardly from the container and through valve 70. For this reason, the bottom of valve housing 80 forms one or more openings 86 to conduct fluid into the valve housing from the associated aerosol container. As will be understood by those of ordinary skill in the art, valve housing 80 may be easily modified for use in an upright position; and specifically, this may be done by providing the valve housing with a conventional inlet, and connecting a conventional dip tube to that inlet to conduct fluid upward into the valve housing from an associated aerosol container.

In use, valve 70 is mounted on an aerosol container and fluid from that container passes into valve housing 80. Normally, valve 70 is in the position shown in Figure 12, in which gasket 84 closes opening 76c of valve stem 76 and prevents fluid from passing from housing 80 and into the valve stem. To discharge fluid from the aerosol container, actuator 10 is pressed downward (as viewed in Figure 12), moving valve stem 76 and valve body 74 downward. This moves side opening 76c of valve stem 76 away from gasket 84, allowing the fluid to pass into the valve stem and then through actuator 10, which discharges the fluid.

As will be understood by those of ordinary skill in the art, actuator 34 may be assembled in aerosol valve 70 in a manner substantially identical to the way in which actuator 10 is assembled in that aerosol valve.

While it is apparent that the invention herein disclosed is well calculated to fulfill the objects previously stated, it will be appreciated that numerous modifications and embodiments may be devised by those skilled in the art, and it is intended that the appended claims cover all such modifications and embodiments as fall within the scope of the present invention.

## Claims

1. An actuator for an aerosol container,comprising:
a body (12) forming
i) an inlet (14) to connect the actuator (10) to a discharge outlet of the container, in fluid communication therewith, to receive fluid therefrom,
ii) a top surface (16) defining a multitude of elongated discharge slits (20) to discharge fluid from the actuator, and
iii) a multitude of body passageways (22) extending between the inlet and a respective one of the discharge slits to conduct the fluid from the inlet to said one of the discharge slits,
the body passageways each being formed in an upper massive part of the body and each having a narrow upper portion (22a), a narrow lower portion (22b) and a wider mid portion (22c), to allow the fluid to expand as the fluid is conducted outward through the body passageways and to draw back into the body passageways excess fluid from the top surface of the actuator.

2. An actuator according to claim 1, wherein side walls (32a, 32b) of each body passageway (22) gradually taper downwardly outwardly from the upper portion (22a) of the passageway to the mid portion (22c) thereof, and taper downwardly inwardly from the mid portion of the passageway to the lower portion (22b) thereof.

3. An actuator according to claim 2, wherein:
the top surface (16) of the body (12) has a central stem (24), and the multitude of elongated discharge slits (20) radially extend outward from said central stem.

4. An actuator according to claim 3, wherein each of the body passageways (22) extends directly downward from the respective one of the discharge slits (20).

5. An actuator according to claim 4, wherein the discharge slits (20) are uniformly spaced apart around the stem (24) of the body (12).

6. An actuator according to claim 2, wherein:
the top surface (16) defines a central top outlet to facilitate the discharge of fluid from the actuator (34);
the body (12) further forms a central conduit (36) extending between and in fluid communication with the inlet (14) and said central top outlet to conduct the fluid from the inlet to the central top outlet; and
the multitude of body passageways (22) are disposed around said central conduit.

7. An actuator according to claim 6, wherein the multitude of body passageways (22) are in fluid communication with and radially extend outward from said central conduit (36).

8. An actuator according to claim 2, wherein the body (12) is made of an integrally molded plastic material.

9. An actuator according to claim 8, wherein the mid portions (22c) of the body passageways (22) are enlarged as said plastic material cools and shrinks.

10. An actuator according to claim 1, wherein:
the body (12) forms a central outlet opening and a central conduit extending between and in fluid communication with the inlet (14) and said central outlet opening to help discharge fluid from the actuator (34), and
the multitude of body passageways (22) are in fluid communication with and extend outward from said central conduit.

11. An actuator according to claim 10, wherein side walls (32a, 32b) of each body passageway (22) gradually taper downwardly outwardly from the upper portion (22a) of the passageway to the mid portion (22c) thereof, and taper downwardly inwardly from the mid portion of the passageway to the lower portion (22b) thereof.

12. An injection molding process for forming an actuator (10, 34) for an aerosol container, comprising:
injecting a plastic material into a mold (38, 40) to form a body (12) having
i) an inlet (14) to connect the actuator (10) to a discharge outlet of the container, in fluid communication therewith, to receive fluid therefrom,
ii) a top surface (16) defining a multitude of elongated discharge slits (20) to discharge fluid from the actuator, and
iii) a multitude of body passageways (22) extending between the inlet and a respective one of the discharge slits to conduct the fluid from the inlet to said one of the discharge slits, the body passageways being formed in an upper massive part of the body;
cooling the plastic material, wherein portions of the plastic material shrink and enlarge intermediate portions of the body passageways between the inlet and the discharge slits;
and
removing the plastic material from the mold.

13. A process according to claim 12, wherein the cooling step includes the steps of forming each body passageway (22) with a narrow upper portion (22a), a narrow lower portion (22b) and a wider mid portion (22c).

14. A process according to claim 12, wherein the mold (38, 40) has a series of internal blades (50, 62), and the injecting step includes the steps of:
injecting the plastic material around the series of blades; and
removing the blades from the plastic material to form initial shapes for the elongated discharge slits (22) and the body passageways (20).

15. A process according to claim 12, wherein the injecting step includes the step of forming a central stem (24) in said body (12), with the multitude of elongated discharge slits (22) and the multitude of body passageways (20) radially extending outward from said central stem.

16. A process according to claim 12, wherein the injection step includes the steps of forming a central top outlet opening in said top surface (16) and forming a central conduit (36) extending between the inlet (14) and said central top outlet, with said multitude of body passageways (20) disposed around said central conduit.

17. A process according to claim 16, wherein the injeting step includes the step of forming the body (12) with the multitude of body passageways (20) in fluid communication with and radially extending outward from said central conduit (36).

## Patentansprüche

1. Betätigungsaufsatz für einen Sprühbehälter mit:
einem Gehäuse (12), das
i) einen Einlaß (14) bildet, der den Betätigungsaufsatz (10) mit einer Abgabe-Auslaßöffnung des Behälters in Flüssigkeitsverbindung verbindet, um von ihm Fluid zu empfangen,
ii) eine Oberseite (16) bildet, die eine Vielzahl von länglichen Austrittsschlitzen (20) zur Abgabe von Fluid aus dem Betätigungsaufsatz definiert, und
iii) eine Vielzahl von Gehäusedurchgängen (22) bildet, die sich zwischen dem Einlaß und einem entsprechenden der Austrittsschlitze erstrecken, um das Fluid von dem Einlaß zu dem einen der Austrittsschlitze zu führen,
wobei die Gehäusedurchgänge jeweils aus einem oberen, massiven Teil des Gehäuses gebildet sind und jeweils einen engen oberen Abschnitt (22a), einen engen unteren Abschnitt (22b) und einen erweiterten Mittelabschnitt (22c) haben, um dem Fluid zu erlauben, sich auszubreiten, wenn das Fluid durch die Gehäusedurchgänge nach außen geführt wird, und um überschüssiges Fluid von der Oberseite des Betätigungsaufsatzes in die Gehäusedurchgänge zurückzuziehen.

2. Betätigungsaufsatz nach Anspruch 1,
dadurch gekennzeichnet, daß
die Seitenwände (32a, 32b) eines jeden Gehäusedurchganges (22) von dem oberen Abschnitt (22a) des Durchganges nach unten zu dessen Mittelabschnitt (22c) schrittweise konisch nach außen zulaufen, und von dem Mittelabschnitt des Durchganges nach unten zu dessen unterem Abschnitt (22b) konisch nach innen zulaufen.

3. Betätigungsaufsatz nach Anspruch 2,
dadurch gekennzeichnet, daß
die Oberseite (16) des Gehäuses (12) einen Mittelschaft (24) hat und sich die vielen länglichen Austrittsschlitze (60) radial nach außen von dem Mittelschaft erstrecken.

4. Betätigungsaufsatz nach Anspruch 3,
dadurch gekennzeichnet, daß sich jeder der Gehäusedurchgänge (22) von dem entsprechenden der Austrittsschlitze (20) direkt nach unten erstreckt.

5. Betätigungsaufsatz nach Anspruch 4,
dadurch gekennzeichnet, daß
die Austrittsschlitze (20) in gleichmäßigen Abständen um den Schaft (24) des Gehäuses (12) herum angeordnet sind.

6. Betätigungsaufsatz nach Anspruch 2,
dadurch gekennzeichnet, daß
die Oberseite (16) eine mittige obere Auslaßöffnung definiert, um die Abgabe von Fluid aus dem Betätigungsaufsatz (34) zu erleichtern;
das Gehäuse (12) weiter einen Mittelkanal (36) bildet, der sich zwischen dem Einlaß (14) und der mittigen oberen Auslaßöffnung in Fluidverbindung erstreckt, um das Fluid aus dem Einlaß zu der zentralen oberen Auslaßöffnung zu führen; und
die vielen Gehäusedurchgänge (22) um den Mittelkanal herum angeordnet sind.

7. Betätigungsaufsatz nach Anspruch 6,
dadurch gekennzeichnet, daß
die vielen Gehäusedurchgänge (22) mit dem Mittelkanal (36) in Fluidverbindung stehen und sich radial von dem Mittelkanal (36) nach außen erstrecken.

8. Betätigungsaufsatz nach Anspruch 2,
dadurch gekennzeichnet, daß
das Gehäuse (12) aus einem im ganzen gegossenen Kunststoffmaterial hergestellt ist.

9. Betätigungsaufsatz nach Anspruch 8,
dadurch gekennzeichnet, daß
die Mittelabschnitte (22c) der Gehäusedurchgänge (22) durch das Abkühlen und Schrumpfen des Kunststoffmaterials vergrößert sind.

10. Betätigungsaufsatz nach Anspruch 1,
dadurch gekennzeichnet, daß
das Gehäuse (12) eine mittige Auslaßöffnung und einen Mittelkanal, der sich zwischen dem Einlaß (14) und der mittigen Auslaßöffnung in Fluidverbindung erstreckt, bildet, um die Abgabe von Fluid aus dem Betätigungsaufsatz (34) zu unterstützen, und
die vielen der Gehäusedurchgänge (22) mit dem Mittelkanal in Fluidverbindung stehen und sich von dem Mittelkanal nach außen erstrecken.

11. Betätigungsaufsatz nach Anspruch 10,
dadurch gekennzeichnet, daß
die Seitenwände (32a, 32b) eines jeden Gehäusedurchganges (22) von dem oberen Abschnitt (22a) des Durchganges nach unten zu dessen Mittelabschnitt (22c) schrittweise konisch nach außen zulaufen und von dem Mittelabschnitt des Durchganges nach unten zu dessen unterem Abschnitt (22b) schrittweise konisch nach innen zulaufen.

12. Spritzgießverfahren zur Bildung eines Betätigungsaufsatzes (10, 34) für einen Sprühbehälter mit den Verfahrensschritten:
Einspritzen eines Kunststoffmaterials in eine Gießform (38, 40), zur Bildung eines Gehäuses (12) mit
i) einem Einlaß (14), um den Betätigungsaufsatz (10) in einer Fluidverbindung mit einer Abgabe-Auslaßöffnung des Behälters zu verbinden, um von ihm Fluid zu empfangen,
ii) einer Oberseite (16), die eine Vielzahl von länglichen Austrittsschlitzen (20) definiert, um Fluid aus dem Betätigungsaufsatz abzugeben und,
iii) einer Vielzahl von Gehäusedurchgängen (22), die sich zwischen dem Einlaß und einem entsprechenden der Austrittsschlitze erstrecken, um das Fluid von dem Einlaß zu dem einen der Austrittsschlitze zu führen, wobei die Gehäusedurchgänge in einem oberen massiven Teil des Gehäuses gebildet sind;
Abkühlen des Kunststoffmaterials, wobei Teile des Kunststoffmaterials schrumpfen und Zwischenabschnitte der Gehäusedurchgänge zwischen dem Einlaß und den Austrittsschlitzen vergrößern; und
Entfernen des Kunststoffmaterials aus der Gießform.

13. Verfahren nach Anspruch 12,
dadurch gekennzeichnet, daß
der Abkühlschritt die Schritte des Bildens eines jeden Gehäusedurchganges (22) mit einem engeren oberen Abschnitt (22a), einem engen unteren Abschnitt (22b) und einem erweiterten Mittelabschnitt (22c) enthält.

14. Verfahren nach Anspruch 12,
dadurch gekennzeichnet, daß
die Gießform (38, 40) eine Serie von inneren Blättern (50, 62) hat, und der Einspritzschritt die Verfahrensschritte enthält:
Einspritzen des Kunststoffmaterials um die Serie der Blätter; und
Entfernen der Blätter aus dem Kunststoffmaterial, um Anfangsformen für die länglichen Austrittsschlitze (22) und die Gehäusedurchgänge (20) zu bilden.

15. Verfahren nach Anspruch 12,
dadurch gekennzeichnet, daß
der Einspritzschritt den Verfahrensschritt des Formens eines Mittelschaftes (24) in dem Gehäuse (12) enthält, wobei die vielen länglichen Austrittsschlitze (22) und die vielen der Gehäusedurchgänge (20) sich radial von dem Mittelschaft nach außen erstrecken.

16. Verfahren nach Anspruch 12,
dadurch gekennzeichnet, daß
der Einspritzschritt die Verfahrensschritte des Formens einer mittleren oberen Auslaßöffnung in der Oberseite (16) und des Formens eines Mittelkanals (36), der sich zwischen dem Einlaß (14) und dem mittleren oberen Auslaß erstreckt, enthält, wobei die vielen Gehäusedurchgänge (20) um den Mittelkanal herum angeordnet sind.

17. Verfahren nach Anspruch 16,
dadurch gekennzeichnet, daß
der Einspritzschritt den Verfahrensschritt des Formens des Gehäuses (12) mit den vielen Gehäusedurchgängen (20) enthält, die in Fluidverbindung mit dem Mittelkanal (36) stehen und sich von dem Mittelkanal (36) radial nach außen erstrecken.

## Revendications

1. Dispositif d'actionnement destiné à un récipient pour aérosol, comprenant:
un corps (12) formant
i) une entrée (14) destinée à raccorder le dispositif d'actionnement (10) à une sortie de décharge du récipient, en communication de fluide avec cette sortie, pour en recevoir du fluide;
ii) une surface supérieure (16) définissant une multitude de fentes de décharge allongées (20) destinées à décharger le fluide du dispositif d'actionnement; et
iii) une multitude de passages (22) de corps s'étendant entre l'entrée et une fente respective parmi les fentes de décharge pour acheminer le fluide depuis l'entrée jusqu'à ladite fente respective desdites fentes de décharge;
les passages du corps étant formés chacun dans une partie massive supérieure du corps et chacun comportant une partie supérieure étroite (22a), une partie inférieure étroite (22b) et une partie médiane plus large (22c) pour permettre au fluide de se détendre lorsqu'il est acheminé vers l'extérieur à travers les passages du corps et au fluide excédentaire de refluer dans les passages du corps depuis la surface supérieure du dispositif d'actionnement.

2. Dispositif d'actionnement selon la revendication 1, dans lequel des parois latérales (32a, 32b) de chaque passage (22) du corps s'inclinent progressivement vers le bas et vers l'extérieur depuis la partie supérieure (22a) du passage jusqu'à la partie médiane (22c) de ce dernier, et s'inclinent vers le bas et vers l'intérieur depuis la partie médiane du passage jusqu'à sa partie inférieure (22b) de ce dernier.

3. Dispositif d'actionnement selon la revendication 2, dans lequel
la surface supérieure (16) du corps (12) comporte une tige centrale (24), et
la multitude de fentes de décharge allongée (20) s'étend radialement vers l'extérieur depuis ladite tige centrale.

4. Dispositif d'actionnement selon la revendication 3, dans lequel chacun des passages (22) du corps s'étend directement vers le bas depuis celle respective des fentes de décharge (20).

5. Dispositif d'actionnement selon la revendication 4, dans lequel les fentes de décharge (20) sont espacées de façon uniforme autour de la tige (24) du corps (12).

6. Dispositif d'actionnement selon la revendication 2, dans lequel :
la surface supérieure (16) définit une sortie centrale supérieure pour faciliter la décharge du fluide depuis le dispositif d'actionnement (34);
le corps (12) forme en outre un conduit central (36) s'étendant entre l'entrée (14) avec laquelle il est en communication et ladite sortie centrale supérieure pour acheminer le fluide depuis l'entrée jusqu'à la sortie centrale supérieure; et
la multitude de passages (22) du corps sont disposés autour dudit conduit central.

7. Dispositif d'actionnement selon la revendication 6, dans lequel la multitude de passages (22) du corps sont en communication de fluide avec ledit conduit central et s'étendent radialement vers l'extérieur depuis ce conduit central (36).

8. Dispositif d'actionnement selon la revendication 2, dans lequel le corps (12) est formé d'une matière plastique moulée d'une seule pièce.

9. Dispositif d'actionnement selon la revendication 8, dans lequel les parties médianes (22c) des passages (22) du corps s'élargissent à mesure que ladite matière plastique se refroidit et se contracte.

10. Dispositif d'actionnement selon la revendication 1, dans lequel:
le corps (12) forme une ouverture de sortie centrale et un conduit central s'étendant entre l'entrée (14), avec laquelle il est en communication de fluide, et ladite ouverture de sortie centrale pour contribuer à décharger le fluide depuis le dispositif d'actionnement (34), et
la multitude de passages (22) du corps sont en communication de fluide avec ledit conduit central et s'étendent vers l'extérieur depuis ledit conduit central.

11. Dispositif d'actionnement selon la revendication 10, dans lequel les parois latérales (32a, 32b) de chaque passage (22) du corps s'inclinent progressivement vers le bas et vers l'extérieur depuis la partie supérieure (22a) du passage jusqu'à la partie médiane (22c) de ce dernier, et s'inclinent vers le bas et vers l'intérieur depuis la partie médiane du passage jusqu'à la partie inférieure (22b) de ce dernier.

12. Procédé de moulage par injection pour former un dispositif d'actionnement (10, 34) destiné à un récipient pour aérosol, comprenant les étapes consistant :
à injecter une matière plastique dans un moule (38,40) pour former un corps (12) comportant
i) une entrée (14) destinée à raccorder le dispositif d'actionnement (10) à une sortie de décharge du récipient, en communication de fluide avec ce dernier, pour en recevoir du fluide,
ii) une surface supérieure (16) définissant une multitude de fentes de décharge allongées (20) destinées à décharger le fluide du dispositif d'actionnement, et
iii) une multitude de passages (22) de corps s'étendant entre l'entrée et une fente respective parmi les fentes de décharge pour acheminer le fluide depuis l'entrée jusqu'à ladite fente respective desdites fentes de décharge, les passages du corps étant formés dans une partie massive supérieure du corps;
à refroidir la matière plastique, les parties de la matière plastique contractant et agrandissant les parties intermédiaires des passages du corps entre l'entrée et les fentes de décharge; et
à enlever du moule la matière plastique.

13. Procédé selon la revendication 12, dans lequel l'étape de refroidissement comprend les étapes consistant à munir chaque passage (22) du corps d'une partie supérieure étroite (22a), d'une partie inférieure étroite (22b) et d'une partie médiane plus large (22c).

14. Procédé selon la revendication 12, dans lequel le moule (38, 40) comporte une série de lames intérieures (50, 62) et l'étape d'injection comprend les étapes consistant :
à injecter la matière plastique autour de la série de lames; et
à retirer les lames de la matière plastique pour donner des formes initiales aux fentes allongées de décharge (22) et aux passages (20) du corps.

15. Procédé selon la revendication 12, dans lequel l'étape d'injection comprend l'étape consistant à former une tige centrale (24) dans ledit corps (12), la multitude de fentes de décharge allongées (22) et la multitude de passages (20) du corps s'étendant radialement vers l'extérieur depuis ladite tige centrale.

16. Procédé selon la revendication 12, dans lequel l'étape d'injection comprend les étapes consistant à former une ouverture de sortie centrale supérieure dans ladite surface supérieure (16) et à former un conduit central (36) s'étendant entre l'entrée (14) et ladite sortie centrale supérieure, ladite multitude de passages (20) du corps étant disposés autour dudit conduit central.

17. Procédé selon la revendication 16, dans lequel l'étape d'injection comprend l'étape consistant à former le corps (12), la multitude de passages (20) du corps étant en communication de fluide avec ledit conduit central (36) et s'étendant radialement vers l'extérieur depuis ledit conduit central (36).
